Europäisches Patentamt

European Patent Office

Office européen des brevets

(11) Publication number : **0 511 832 A1**

# EUROPEAN PATENT APPLICATION

(21) Application number : 92303830.1

(22) Date of filing : 28.04.92

(51) Int. Cl.⁵ : **B60S 1/34, F16C 11/04**

(30) Priority : **29.04.91 AU 5872/91**

(43) Date of publication of application :
**04.11.92 Bulletin 92/45**

(84) Designated Contracting States :
**BE DE ES FR IT**

(71) Applicant : **TRICO-FOLBERTH LIMITED**
**Great West Road**
**Brentford Middlesex TW8 9HP (GB)**

(72) Inventor : **Knaggs, Ronald Trevor**
**11 Wauchope Avenue**
**Narre Warren, Victoria 3805 (AU)**
Inventor : **Burton, John Edward**
**123 McFees Road**
**Dandenong North, Victoria 3175 (AU)**

(74) Representative : **Pedder, James Cuthbert**
**J.C. Pedder & Co. 38 Norbury Cross**
**Norbury London SW16 4JQ (GB)**

(54) Housing for a rotatable shaft.

(57)   A housing (10) for a rotatable shaft (20) comprises a body portion (11) having a first end (21) and a second end (22) disposed oppositely to and axially remote from each other. The body is provided with an integrally formed retaining member (12) adapted to maintain axial positioning of the rotatable shaft (20).

Fig.1

Fig.2

EP 0 511 832 A1

This invention relates to a housing for a rotatable shaft which is particularly, but not exclusively useful in the manufacture of the drive mechanism for windscreen wipers.

In conventional windscreen wipers, between the main wiper arm and the lever driving the wiper arm, there exists a drive shaft which oscillates so as to transfer the motion of the lever to the wiper arm. Generally, this drive shaft is surrounded by a housing supporting it in the surrounding vehicle panel. In fact, this housing is part of a pivot assembly comprising a plurality of parts required to support, seal and allow rotation of the drive shaft. Where the drive shaft is operably connected to the driving lever inside the vehicle, at a first end, a bearing is provided. additionally, a bearing is provided where the wiper arm is operably connected to the drive shaft outside the vehicle at a second end of the assembly. The assembly at this second end of the drive shaft also includes a sealing 'O' ring, in a thrust bearing washer and circlip. In order to take up the length tolerances and to bias the pivot assembly towards the 'O' ring seal to prevent water ingress, at the first lever end of the shaft there is also provided a wave washer. In totality, 7 parts make up a conventional pivot assembly for drive shafts of this type.

A typical arrangement of this type is illustrated in figure A. The drive shaft 10 is supported in a housing 24 in the surrounding vehicle panel and connects the upper end of shaft on the outside of the vehicle to the wiper arm 11 and the lower end of the shaft on the inside of the vehicle to a lever 12 providing oscillating movements to the drive shaft. At this lower end of the shaft a bearing is provided. Another bearing 18 is also provided at the upper end of the shaftyt6 on the outside of the vehicle. At this upper end of the drive shaft a sealing 'O' ring 17 is also provided as well as a thrust bearing washer 16 and circlip 15. To take up the length tolerances at the lower end of the shaft, inside the vehicle, a wave washer is provided.

The manufacture of assemblies of the type described is complicated due to the large number of parts required and is therefore difficult to automate. A further disadvantage is that these assemblies, due to their intricacy, are also expensive to produce.

Accordingly, it is the object of this invention to provide a pivot assembly which ameliorates at least some of the disadvantages of the prior art. In particular, it is an objective to provide an assembly which is easier and faster to manufacture and assemble.

To this end, there is provided housing for a rotatable shaft comprising a body portion having first and second ends disposed oppositely to and axially remote from each other, said body being provided with an integrally formed retaining member adapted to maintain axial positioning of said rotatable shaft.

This invention is predicated upon the surprising discovery that by the use of an integrally formed retaining member, the rotatable shaft is retained in place in the pivot assembly, the rotatable shaft can be sealed against water ingress and the need for a thrust bearing washer is averted. Conveniently, at least 3 parts of the prior art assembly are avoided and therefore the ease and speed of assembly can be improved.

Preferably the integrally formed retaining member is located at or adjacent the first end of the housing. More conveniently, the integrally formed retaining member is an inwardly extending lip.

In a preferred aspect of the invention, the housing also forms a bearing surface and thus the need for a separate bearing in the assembly is averted and the speed and ease of assembly is proportionately increased again.

More preferably, the integrally formed retaining member forms in cross-section a frusto-conically shaped extension of the body portion of the housing and is therefore particularly well adapted to retain the rotating shaft in position at the same time forming a seal against ingress of foreign matter.

In order to maximise ease and speed of assembly, a particularly preferred form of the invention is that in which the frusto-conically shaped extension of the housing is resilient so as to allow the rotatable shaft to be snap fitted without damage to the housing.

In an alternative embodiment, it is necessary to use, in adjunct with the housing, an 'O' ring seal, since the radially segmented lip on the housing cannot seal the rotatable shaft against ingress of foreign matter.

In another aspect of this invention, there is provided housing for a rotatable shaft comprising a body portion having first and second ends disposed oppositely to and axially remote from each other,

means for biasing said body portion in n axial direction being provided at or adjacent said second end.

The provision of the biasing means at or adjacent the second end of the body portion of the housing very conveniently obviates the necessity of having a separate wave washer to ensure that a seal is made at the axial edge of the second end of the assembly remote from said second axial end edge and, in a manner similar to that outlined hereinabove, the decrease in the number of parts in the assembly correlates to an increase in the efficiency of manufacture of assemblies of this type.

In a proffered form of this aspect of the invention, the biasing means is formed integrally with the body portion of the housing.

pore particularly the integrally formed housing means takes the form of a disc spring.

Most conveniently, it is possible for the housing provided on its body portion with an integrally formed disc spring to also form a bearing surface for the rotatable shaft and thus the number of parts of the assembly is still further reduced.

In a further aspect of this invention, there is provide housing for a rotatable shaft comprising a body portion having first and second ends disposed oppositely to and axially remote from each other, said body portion being provided with an integrally formed retaining member adapted to maintain axial positioning of said rotatable shaft and said second end of said body portion having at or adjacent said second end, means for biasing said body portion in an axial direction.

In a preferred form of this aspect of the invention, the biasing means is formed integrally with said body portion. It can be seen, that in this aspect of the invention, the multiplicity of parts which constitute the assembly of the prior art are replaced by a single housing thereby allowing greatest ease of manufacture.

Preferably the housing of this aspect of the invention also forms a bearing surface or surfaces for the rotatable shaft.

In particular, in this aspect of the invention, the integrally formed retaining member a t or adjacent the first end of the housing is frusto-conical in cross-section and snap fits onto said rotatable shaft by virtue of it being resilient.

Most preferably the integrally formed biasing means at or adjacent the second end of the housing, being remote from said first end, takes the form of a disc spring so as to bias said housing towards towards said first end of said body portion. In this way, when the housing is located on a rotatable shaft, pressure is exerted on said first end by said biasing means on said second end thereby ensuring said first end seals the rotatable shaft against ingress by foreign matter.

In yet another aspect of the invention there is provided housing for a rotatable shaft of a windscreen wiper assembly being adapted to operably link a drive lever to a main arm of said windscreen wiper assembly,

said housing comprising a body portion having first and second ends disposed oppositely to and axially remote from each other,

said body portion being adapted to cooperate at said first end with said main arm of said windscreen wiper assembly and at said second end with said drive lever, and being provided at or adjacent said first end with an integrally formed retaining member adapted to maintain axial positioning of said rotatable drive shaft, and at or adjacent said second end with means for biasing said body portion in an axial direction.

The most preferred form of the invention will now be described with reference to the accompanying drawings in which:

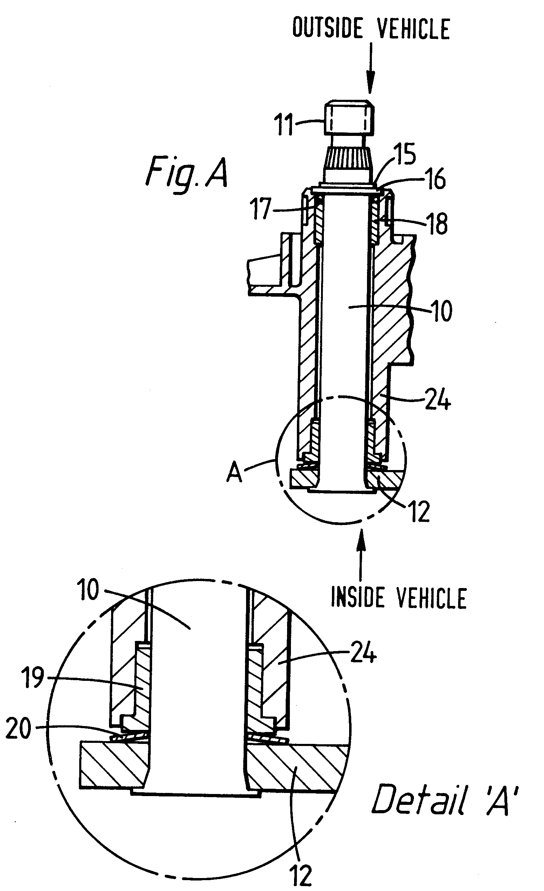

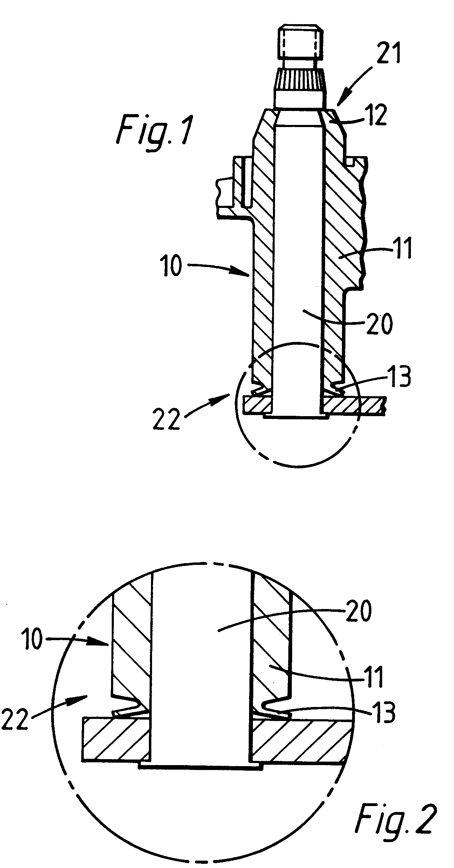

Figure 1 is a sectional view of the housing of the invention on a rotatable shaft;

Figure 2 is an exploded view of the lower portion of Figure 1 indicated.

The housing 10 has a body portion 11 which is provided on a first end 21 with an inwardly extending lip 12 which forms a frusto-conical shape in cross section and is resilient so as to allow the housing to be snap fitted to the rotatable shaft 20. On the second end 22 of the housing which is remote from the first end, a biasing means 13 is provided in the form of a disc spring. This disc spring, integral with the body portion of the housing enables the housing to be axially biased towards the first end where the biasing results in the frusto-conical shaped lip 12 forming an effective seal against ingress by foreign matter between the housing and the rotatable shaft. The disc spring shaped biasing means of the housing is in situ in the drive mechanism of a windscreen wiper or the like.

It can be seen that this integrally formed housing which has a dual function as a bearing has advantages over the pivot assemblies of the prior art inasmuch As the multiplicity of parts formerly required to house and seal the rotatable shaft of the drive mechanism of a windscreen wiper in place is replaced by a single housing which is self-retaining in the windscreen wiper assembly and easy and fast to manufacture and assemble

It will be appreciated that various modifications may be made to the above described embodiments without departing from the scope of the invention

While the invention has been described with particular reference to the drive mechanism of windscreen wipers, it is to be understood that the invention is not limited to the windscreen wiper field but may also be applied to situations in which a similar housing is required.

## Claims

1. A housing for a rotatable shaft (20) <u>characterised by</u> a body portion (11) having a first end (21) and a second end (22) disposed oppositely to and axially remote from each other, and an integrally formed retaining member (12) provided on the body portion (11) and adapted to maintain axial positioning of the rotatable shaft (20).

2. A housing for a rotatable shaft as claimed in claim 1, <u>characterised in that</u> the integrally formed retaining member (12) is located at or adjacent the first end (21) of the housing (10).

3. A housing for a rotatable shaft as claimed in claim 1 or 2, <u>characterised in that</u> the integrally formed retaining member is an inwardly extending lip (12).

4. A housing for a rotatable shaft as claimed in any one of claims 1-3, <u>characterised in that</u> the housing (10) forms a bearing surface for the rotatable shaft (20).

5. A housing for a rotatable shaft as claimed in any one of claims 1-4, characterised in that the integrally formed retaining member forms in cross-section a frusto-conically shaped extension (12) of the housing (10).

6. A housing for a rotatable shaft as claimed in any one of claims 1-6, characterised in that the integrally formed retaining member comprises a resilient seal (12).

7. A housing for a rotatable shaft as claimed in any one of claims 1-6, characterised in that the integrally formed retaining member (12) is radially segmented and the housing (10) further comprises a sealing member.

8. A housing for a rotatable shaft (20) characterised by a body portion (11) having a first end (21) and a second end (22) disposed oppositely to and axially remote from each other, biassing means (13) for biasing the body portion (11) in an axial direction being provided at or adjacent the second end (22).

9. A housing for a rotatable shaft as claimed in claim 8, characterised in that the biasing means (13) is formed integrally with the body portion (11) of the housing (10).

10. A housing for a rotatable shaft as claimed in claim 8 or 9, characterised in that the biasing means comprises a disc spring (13) .

11. A housing for a rotatable shaft as claimed in any one of claims 8-10, characterised in that the housing (10) forms a bearing surface for the rotatable shaft (20).

12. A housing for a rotatable shaft characterised by a body portion (11) having a first end (21) and a second end (22) disposed oppositely to and axially remote from each other, an integrally formed retaining member (12) on the body portion (11) adapted to maintain axial positioning of the rotatable shaft and biasing means on the second end (22) of the body portion (11) for biasing the body portion (11) in an axial direction and located at or adjacent the second end (22).

13. A housing for a rotatable shaft as claimed in claim 12, characterised in that the integrally formed retaining member (12) is located at or adjacent the first end (21) of the housing (10).

14. A housing for a rotatable shaft as claimed in claim 12 or 13, characterised in that the integrally formed retaining member is an inwardly extending lip (12).

15. A housing for a rotatable shaft as claimed in any one of claims 12-14, characterised in that the biasing means (13) is formed integrally with the body portion (11) at the second end (22) of the body portion (11).

16. A housing for a rotatable shaft as claimed in any one of claims 12-15, characterised in that the housing (10) forms a bearing surface for the rotatable shaft (20).

17. A housing for a rotatable shaft as claimed in any one of claims 12-16, characterised in that the integrally formed retaining member (12) at or adjacent the first end (21) of the housing (10) is frusto-conical in cross-section and forms a resilient seal.

18. A housing for a rotatable shaft as claimed in any one of claims 12-1,7 characterised in that the biasing means comprises a disc spring (13).

19. A housing for a rotatable shaft as claimed in any one of claims 12-18, characterised in that the integrally formed retaining member (12) is radially segmented and the housing (10) further comprises a sealing member.

20. A housing for a rotatable drive shaft of a windscreen wiper assembly being adapted to operably lin a drive lever to a main arm of the windscreen wiper assembly, characterised by a body portion (11) having a first end (21) and a second end (22) disposed oppositely to and axially remote from each other, the body portion (11) being adapted to cooperate at the first end (21) with the main arm of the windscreen wiper assembly and at the second end (22) with the drive lever, and being provided at or adjacent the first end (21) with an integrally formed retaining member (12) adapted to maintain axial positioning of the rotatable drive shaft (20), and at or adjacent the second end (22) with biasing means (13) for biasing the body portion (11) in an axial direction.

21. A housing for a rotatable drive shaft of a windscreen wiper assembly as claimed in claim 20, characterised in that the integrally formed retaining member is an inwardly extending lip (12) and the biasing means (13) is formed integrally with the body portion (11) at the second end (22).

22. A housing for a rotatable drive shaft of a windscreen wiper assembly as claimed in claim 20 or 21, characterised in that the housing (10) forms a bearing surface for the rotatable shaft (20).

23. A housing for a rotatable drive shaft of a windscreen wiper assembly as claimed in any one of claims 20-22, <u>characterised in that</u> the integrally formed retaining member (12) is frusto-conical in cross section and forms a resilient seal.

Fig. A

OUTSIDE VEHICLE

INSIDE VEHICLE

Detail 'A'

Fig.1

Fig.2

**European Patent Office**

# EUROPEAN SEARCH REPORT

Application Number

EP 92 30 3830

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 187 965 (SWF) | 1-6,8, 11-14, 16,17 | B60S1/34 F16C11/04 |
| Y | * abstract; claims 1-6; figures 1,2 * | 9,10,15 | |
| Y | * page 1, line 1 - page 2, line 25 * * page 3, line 4 - page 4, line 17 * --- | 18,20-23 | |
| Y | DE-A-2 107 706 (NIPPONDENSO) | 9,10,15 | |
| Y | * the whole document * | 18,20-23 | |
| A | --- | 1,8,12 | |
| A | GB-A-1 249 130 (FABRICA ITALIANA MAGNETI MARELLI) | 1-6,8, 11-14 | |
| A | * the whole document * --- | 16,17, 20-23 | |
| A | GB-A-2 109 674 (GENERAL MOTORS) | 1,7,8 | |
| A | * abstract; claims 1,2; figures 1-3 * * page 1, line 1 - line 90 * * page 1, line 109 - page 2, line 59 * --- | 12,19,20 | |
| A | FR-A-1 586 877 (EQUIPMENTS S.E.I.M.) | 1,8 | TECHNICAL FIELDS SEARCHED (Int. Cl.5 ) |
| A | * figures 7-13 * | 10-12 | |
| A | * page 1, line 1 - page 2, line 5 * | 16,18 | B60S |
| A | * page 4, line 1 - line 24 * | 20,22 | F16C |
| A | * page 5, line 24 - line 34 * ----- | | |

The present search report has been drawn up for all claims

| Place of search | Date of completion of the search | Examiner |
|---|---|---|
| THE HAGUE | 30 JULY 1992 | WESTLAND P.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)